Europäisches Patentamt

European Patent Office

Office européen des brevets

(11) Publication number: **0 226 832**
A1

# EUROPEAN PATENT APPLICATION

(21) Application number: 86116202.2

(22) Date of filing: 21.11.86

(51) Int. Cl.⁴: **B 60 G 15/06**

(30) Priority: 20.12.85 IT 6809185

(43) Date of publication of application:
01.07.87 Bulletin 87/27

(84) Designated Contracting States:
DE ES FR GB SE

(71) Applicant: FIAT AUTO S.p.A.
Corso Giovanni Agnelli 200
I-10135 Torino(IT)

(72) Inventor: Leonardis, Raffaele
Corso Unione Sovietica, 409
I-10100 Torino(IT)

(74) Representative: Prato, Roberto et al,
c/o Ingg. Carlo e Mario Torta Via Viotti 9
I-10121 Torino(IT)

(54) Suspension for a motor vehicle wheel.

(57) The suspension (1) comprises a shock absorber (2) (conveniently of McPherson type) the rod (4) of which is connected to the vehicle body (5) by means of a cup-shaped element (5) fixed inverted on the road (4), and a sleeve (16) of elastomer material essentially interposed between the edge (15) of the cup-shaped element (8) and the vehicle body (5).

EP 0 226 832 A1

./...

Croydon Printing Company Ltd.

6416202.2

0226832

SUSPENSION FOR A MOTOR VEHICLE WHEEL

This invention relates to a motor vehicle suspension. More particularly, the invention relates to an improvement in the system for connecting the rod of a shock absorber (for example of the McPherson type) to the vehicle body.

Known systems for connecting together the body and shock absorber provide for fixing the upper end part of the shock absorber rod to the body. In this configuration, the distance between the body and the shock absorber casing is of the order to 10-16 cm, and this results in considerable bending stresses in the said rod, with consequent high hysteresis, in addition to wear of the guides. It is also necessary to use a particularly strong rod to support the said large bending stresses.

The object of the present invention is to provide a suspension which obviates the aforesaid drawbacks of known suspensions. Said object is attained according to the present invention by a suspension for a motor vehicle wheel, of the type comprising a shock absorber the rod of which, mobile axially relative to the respective casing, is connected to the motor vehicle body by connection means, characterised in that said connection means comprise:

a cup-shaped element with an end wall fixed in known manner to the end portion of said rod, and with a lateral wall the inner surface of which faces the lateral surface of said end portion of said rod; and

a sleeve of elastomer material mounted coaxial to said shock absorber and comprising an inner zone fixed to the edge of said cup-shaped element and an outer zone connected to said motor vehicle body by fixing means; the edge of said cup-shaped element being conveniently close to a portion of the shock absorber casing which lies in the vicinity of the zone from which said rod emerges, so that when in use the bending moment acting on said rod and consequently also the hysteresis of said shock absorber are reduced.

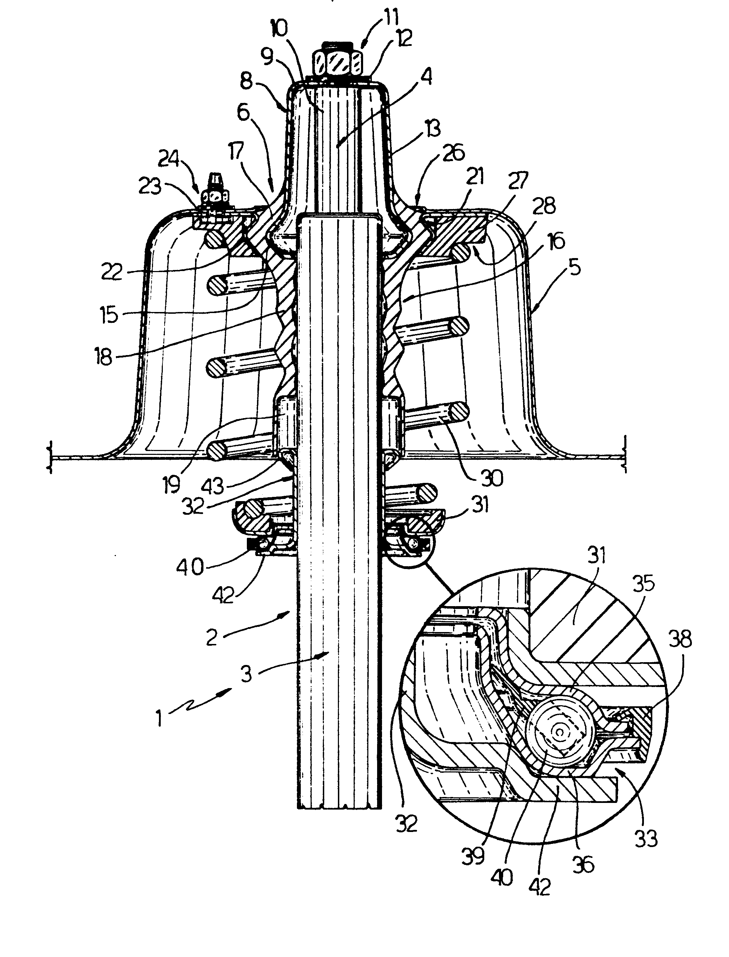

The present invention will be more apparent from the description of a preferred embodiment thereof given hereinafter by way of non-limiting example with reference to the accompanying drawing which represents a sectional elevation thereof.

In this drawing, the reference numeral 1 indicates overall a suspension for a motor vehicle wheel (not shown). The suspension 1 comprises essentially a shock absorber 2 provided with a casing 3 which is connected to an upright in a manner not shown, and a rod 4 which is connected, in the manner described hereinafter, to a portion 5 of the vehicle body by connection means formed in accordance with the present invention and indicated overall by 6.

In particular, the connection means 6 consist essentially of a cup-shaped element 8, the end wall 9 of which is fixed to the end portion 10 of the rod 4 by a nut 11 and a washer 12. The cup-shaped element 8 has the inner surface of its end wall 9 resting on the top surface of the end portion 10, and also comprises a lateral wall 13 the inner surface of which faces the lateral surface of the end portion 10 of the rod 4. The lateral wall 13 of the element 8 comprises an edge 15 which is suitably shaped to define an annular projection extending radially outwards.

The connection means 6 also comprise a sleeve 16 of elastomer material mounted coaxial to the shock absorber 2 so as to be essentially interposed between this latter and the body 5. More particularly, the sleeve 16 has a first portion 17 surrounding essentially the edge 15 of the cup-shaped element 8, and a second portion 18 mounted around the casing 3 of the shock absorber 2. The portion 18 has essentially an undulated inner surface and an undulated outer surface, and at the end distant from the portion 17 comprises a hollow annular seat 19.

The portion 17 of the sleeve 16 has an outer annular reinforcement 21 comprising essentially a profiled portion 22 surrounding the portion 17 of the sleeve 16 and a flat portion 23 which is connected to the body 5 by a plurality of bolts 24.

It can be seen in particular that the vehicle body portion 5 is essentially of dome configuration and in its upper zone comprises a through hole 26 from which there upwardly emerges a large part of the lateral wall 13 of the element 8 to which said rod 4 of the shock absorber 2 is connected.

To the reinforcement 21 there is connected a ring 27 comprising in its downwardly facing part a seat 28 for housing the end of a spring 30, the opposite end of which rests on a disc 31 mounted coaxial to the casing 3 of the shock absorber 2. More particularly, the disc 31 is connected to the casing 3 of the shock absorber 2 by a sleeve 32 fixed to the casing 3 and a bearing 33 interposed between the disc 31 and sleeve 32. The bearing 33, which is essentially of known type, comprises in particular a first and second race 35, 36 respectively fixed to the disc 31 and to the sleeve 32. The races 35, 36 are connected together by an annular peripheral gasket 38 to define an annular interspace 39 in which the balls 40 are located.

The sleeve 32 supports the race 36 of the bearing 33 by means of a radially extending annular portion 42. In addition, at the opposite end to said portion 42 the sleeve 32 comprises an end portion 43 which is suitably bent outwards to engage the annular seat 19 of the sleeve 16 each time this latter moves axially downwards.

The operation of the suspension 1 is of known type, and is therefore not described in detail. It should however be noted that the spring 30 mounted coaxial to the shock absorber 2 between the ring 27 and disc 31 improves the damping function of the entire suspension 1. In addition, connecting the rod 4 to the body 5 by means of the cup-shaped element 8 and sleeve 16 reduces the arm of application of the transverse forces transmitted to the rod 4 by the body 5. This therefore results in a reduction in the bending moment acting on the rod, and a reduction in the wear of the guides. For equal performance, it is therefore possible to use a rod with a cross-section less than the currently used rods, or to use a hollow rod, thus substantially reducing the weight in both cases. In addition, the reduction in the load acting on the guide also results in a reduction in the shock absorber hysteresis, resulting in an overall improvement in driving comfort.

It should also be noted that the support for the disc 31 formed by the sleeve 32 and bearing 33 enables the spring 30 and casing 3 of the shock absorber 2 to rotate relative to each other, this rotation being necessary during steering as the spring 30 is rigid with the body 5.

Finally, it is apparent that modifications can be made to the suspension 1 heretofore described, but without leaving the scope of the inventive idea.

PATENT CLAIMS

1.    A suspension (1) for a motor vehicle wheel, of the type comprising a shock absorber (2) the rod of which, mobile axially relative to the respective casing (3), is connected to the motor vehicle body (5) by connection means (6), characterised in that said connection means (6) comprise:

a cup-shaped element (8) with an end wall (9) fixed in known manner to the end portion (10) of said rod (4), and with a lateral wall (13) the inner surface of which faces the lateral surface of said end portion (10) of said rod (4); and

a sleeve (16) of elastomer material mounted coaxial to said shock absorber (2) and comprising an inner zone fixed to the edge (15) of said cup-shaped element (8) and an outer zone connected to said motor vehicle body (5) by fixing means (21, 24); the edge of said cup-shaped element (8) being conveniently close to a portion of the casing (3) of said shock absorber (2) which lies in the vicinity of the zone from which said rod (4) emerges, so that when in use the bending moment acting on said rod (4) and consequently also the hysteresis of said shock absorber (2) are reduced.

2.    A suspension as claimed in claim 1, characterised in that said edge (15) of said cup-shaped element (8) has essentially the structure of an annular projection extending radially outwards, and said sleeve (16) has a portion (17) in the form of an annular projection surrounding said edge (15) of the cup-shaped element (8).

3.    A suspension as claimed in claim 1, characterised in that said fixing means (21, 24) comprise essentially an annular reinforcement (21) surrounding part of said sleeve (16), and a plurality of bolts (24) for fixing said reinforcement (21) to the body (5)

4. A suspension as claimed in claim 3, characterised in that said reinforcement (21) consists essentially of a profiled portion (22) surrounding said first portion (17) of said sleeve (16), and a flat annular portion (23) cooperating with said body (5).

5. A suspension as claimed in claim 1, characterised in that said sleeve (16) is provided with a second portion (18) surrounding the casing (3) of said shock absorber (2) and having annular undulations provided both on its inner surface and on its outer surface.

6. A suspension as claimed in claim 1, characterised in that said sleeve (16) has an end portion defining a hollow anular seat (19) arranged to receive part of a tubular element (32) fixed to the casing (3) of said shock absorber (2) and supporting, by means of a bearing (33), a disc (31) forming a seat for housing one end of a spring (30) the opposite end of which is received in a corresponding housing seat (28) rigid with said body (5).

7. A suspension as claimed in claim 6, characterised in that said bearing (33) consists essentially of a pair of races (35, 36) between which a plurality of rolling bodies (40) is interposed, a first race (35) being mounted rigid with said disc (31) and the second race (36) being mounted rigid with said tubular element (32).

**EUROPEAN SEARCH REPORT**

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 301 399  (GENERAL MOTORS) <br> * Whole document * | 1-4 | B 60 G  15/06 |
| | --- | | |
| A | FR-A-2 294 869  (RENAULT) <br> * Whole document * | 1-6 | |
| | --- | | |
| A | DE-A-2 249 174  (FORD) <br> * Whole document * | 1-6 | |
| | --- | | |
| A | DE-A-2 626 392  (OPEL) <br> * Whole document * | 1-4 | |
| | --- | | |
| A | FR-A-1 220 306  (DAIMLER-BENZ) | | |
| | ----- | | **TECHNICAL FIELDS SEARCHED (Int. Cl.4)** |
| | | | B 60 G <br> F 16 F |

The present search report has been drawn up for all claims

| Place of search | Date of completion of the search | Examiner |
|---|---|---|
| THE HAGUE | 27-03-1987 | BLURTON M.D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82